# EUROPEAN PATENT SPECIFICATION

(11) **EP 1 509 386 B1**
(45) Date of publication and mention of the grant of the patent: **11.07.2007**
(21) Application number: 03735428.9
(22) Date of filing: 21.05.2003
(51) Int. Cl.: B29D 30/16, B29C 47/38, B29C 47/92, B29D 30/62

(54) **A METHOD AND APPARATUS FOR MANUFACTURING ELASTOMERIC MATERIAL COMPONENTS OF A TYRE FOR VEHICLE WHEELS**
VERFAHREN UND VORRICHTUNG ZUR HERSTELLUNG VON ELASTOMEREN MATERIALBESTANDTEILEN EINES REIFENS FÜR FAHRZEUGRÄDER
PROCEDE ET APPAREIL DE FABRICATION DE COMPOSANTS DE MATIERE ELASTOMERE D'UN PNEU POUR ROUES D'UN VEHICULE

(30) Priority: 31.05.2002 WO PCT/IB02/01935
(43) Date of publication of application: 02.03.2005
(73) Proprietor: Pirelli Tyre S.p.A., 20126 Milano (IT)
(72) Inventor: CARETTA, Renato, I-21013 Gallarate (IT); MARCHINI, Maurizio, I-20038 Seregno (IT); SABBATANI, Enrico, I-28069 Trecate (IT)
(74) Representative: Tansini, Elio Fabrizio
(86) International application number: PCT/EP2003/005320
(87) International publication number: WO 2003/101712

(56) References cited:
- EP-A- 0 968 814
- EP-A- 1 033 236
- EP-A- 1 084 814
- WO-A-01/32409
- WO-A-01/36185
- US-A- 5 156 781
- US-A- 5 527 499

## Description

The present invention relates to a method and an apparatus for manufacturing elastomeric material components of a tyre for vehicle wheels.

Manufacturing of tyres for vehicle wheels involves formation of a carcass structure essentially made up of one or more carcass plies substantially of a toroidal shape and having their axially opposite side edges in engagement with respective annular reinforcing elements usually referred to as "bead cores".

Provided on the carcass structure at a radially external position, is a belt structure comprising one or more belt strips in the form of a closed ring and essentially made up of textile or metallic cords suitably oriented with respect to each other and the cords belonging to the adjacent carcass plies.

At a radially external position of the belt structure, a tread band is provided which usually consists of a band of elastomer material of suitable thickness.

Finally, a pair of sidewalls is provided on the opposite sides of the tyre, each of said sidewalls covering a side portion of the tyre included between a so-called shoulder region disposed close to the corresponding side edge of the tread band, and a so-called bead located at the respective bead core.

To the aims of the present invention it should be pointed out that by the term "elastomer material" it is intended a composition comprising at least one elastomeric polymer and at least one reinforcing filler. Preferably this composition further comprises additives such as a cross-linking and/or plasticizing agent, for example. Due to the presence of the cross-linking agent, this material can be cross-linked through heating so as to form the final article of manufacture.

Traditional production methods essentially provide for the above listed tyre components to be first made separately of each other, to be then assembled during a tyre building step.

However, there is a general tendency in present technologies to resort to production methodologies enabling production and storage of semi-finished products to be minimised or possibly eliminated.

For the purpose, production processes have been proposed that aim at obtaining given tyre components such as tread band, sidewalls or others, by laying down a continuous elongated element of elastomer material of a reduced section as compared with that of the component to be obtained, onto a support carrying the tyre being worked, which elongated element is such arranged as to form, around the rotation axis of the tyre, a plurality of consecutive coils disposed in side by side and/or superposed relationship so as to define the component itself in its final configuration.

WO 01/36185 A1 in the name of the same Applicant, describes a method for manufacturing elastomeric material components of a tyre for vehicle wheels comprising the steps of: feeding a continuous elongated element from a delivery member disposed close to a toroidal support for application of said elongated element onto the toroidal support itself; giving the toroidal support a rotatory motion around its geometrical rotation axis, so that the elongated element is circumferentially distributed on the toroidal support; carrying out controlled relative displacements for transverse distribution between the toroidal support and the delivery member to form a tyre component with said elongated element which is defined by a plurality of coils laid down in side by side or mutual superposed relationship according to a pre-established deposition pattern depending on a predetermined cross-section outline to be given to said component. In particular said document teaches that if the peripheral speed of the toroidal support at the point of application of an elongated element is such controlled that a conveniently higher value than the feeding speed of the elongated element itself by the delivery member is maintained, adhesion of the applied elongated element is greatly improved and important advantages in terms of operating flexibility are achieved. In particular, the possibility of conveniently modifying the cross-section sizes of the elongated element is achieved so as to adapt the latter to the thickness of the component to be made, at the different points of the cross-section outline of the component itself.

EP 0 968 814 A2 describes a process and an apparatus for laying down elastomer materials for the constituent elements of a tyre. An elastomer material for a constituent element of a tyre is laid down onto a support carrying out a high-efficiency and high-accuracy rotation through arrangement of a pair of counter-rotating rollers close to a radially-external upper surface portion of the support and utilising a distance defined between the rollers as a roller matrix. The apparatus for laying down elastomer materials for the constituent elements of a tyre around a rotating support comprises a volumetric extruder to feed the raw elastomer material to the rotating support, a pair of counter-rotating rollers placed close to an outlet of the volumetric extruder and close to a radially external portion of the rotating support, and a distance defined between the pair of rollers and serving as a matrix for the elastomer material to be laid down.

US 4,963,207 discloses a method and an apparatus for building a tyre by application of elastomer products to a rigid support. The elastomer products forming part of the tyre structure are laid down on a rigid core by a volumetric extruder provided with a piston and having an orifice of small sizes located close to the surface to which the elastomer material is applied. Arrangement of the elastomer materials takes place by a meridian positioning of the orifice with respect to the receiving surface, through extrusion of a controlled volume of elastomer material.

EP 1 211 057 A2 discloses a method for manufacturing pneumatic tyre wherein, during formation of a green tyre, at least one constitutive member, such as a sidewall, is formed by radially outwardly expanding a widthwide center portion of a substantially cylindrical carcass band, and subsequently winding an unvulcanized rubber strip and joining the rubber strip onto an outer peripheral surface of the expanded carcass band.

EP 1 201 414 A2 discloses a method for manufacturing the sidewall of a pneumatic tyre. Said method comprises assembling unvulcanized rubber components to make a green tyre, vulcanizing the green tyre, and winding an unvulcanized rubber tape so that the windings collectively have a predetermined cross sectional shape for at least one of the unvulcanized rubber components to thereby make said at least one of the unvulcanized rubber components.

US 5,156,781 discloses an extrusion system wherein strips of rubber compound are uniformly heated and mixed in an extruder and then passed through a low pressure drop strainer to remove foreign matter. The strained compound then is fed directly into a gear pump which delivers precise volumes of the rubber compound immediately into the spread chamber of an extrusion head after which it passes through a die to form a precise strip of the rubber compound. Safety signals, such as ON/OFF controls, are provided to ensure a safe operation of the extrusion system to prevent injury and machine damage. A control system regulates the speed of the extruder to provide a near constant pressure at the entrance port of the gear pump to precisely regulate the rate of extrusion of the compound from the extrusion head.

EP 1 033 236 teaches an apparatus wherein an extrusion device is formed by a tape maker comprising an extruder for making a unvulcanized rubber tape. The apparatus further comprises a winding drum and at least one conveyor for conveying the rubber tape from a tape maker to the winding drum. The conveyor is made up of a rubber-tape receiving section, an accumulator section, a traverser section and a swing section between the accumulator section and traverser section. The consumption rate of the rubber tape in the winding drum varies widely, and the rubber-tape accumulator can absorb such variations. Therefore, the tape maker can produce the rubber tape at an almost constant production rate. In particular, the apparatus is designed to perform a discontinuous supply of the rubber tape on the drum, thought a continuous supply of the tape from the extruder is maintained.

The Applicant has ascertained that the prior art methods and apparatus for building a tyre or making a tyre component by deposition of elastomer elements onto a support, have some drawbacks.

The injection chamber present in the extruders provided in some of the above mentioned embodiments does not allow a continuous use of the line comprising the extruder and the support associated with its actuating devices. In fact between two distinct injections of elastomer material the injection chamber needs to be reloaded, which reloading requires some time during which working of said material is stopped.

Since the length of the working path on the extrusion screw depends on the loading moment within the extruder, the elastomer material in said injection extruders is worked in an uneven manner, i.e. working is not constant for all the elastomer material masses delivered. Consequently, the features of the delivered material are not constant and the outgoing flow rate is subjected to continuous variations that adversely affect the process of laying down the elongated elements on the same support, so that the latter show unexpected variations.

In addition during working the elastomer material is submitted to different thermal shocks due to how the extruders themselves are made; in fact, they are provided with very narrow passage ports at one or more locations at their inside. Consequently, the features of the extrusion are not homogeneous and constant during production, so that sometimes there are imperfections in the finished product.

These imperfections are mainly due to phenomena of premature cross-linking on the elastomer material known as "scorching" which can give rise to clots clogging the injector. At this point frequent purging of the injector nozzle becomes necessary, and this laborious operation stops the working cycle.

Finally the Applicant has ascertained that the prior art methods and apparatus do not ensure an effective synchronism between the support movements and feeding of the extrusion to the outlet, since the extrusion features are affected by working to which the extrusion is submitted, as previously discussed.

The Applicant experimented that by use of extruding apparatus comprising an extrusion screw associated with a gear pump, the working process of the elastomer material and the process for accomplishment of tyre components on a support involving use of elongated elements of said extruded elastomer material obtained through said apparatus, do not suffer from the drawbacks found in the known art. Consequently, by suitably using a device for directly signalling the presence of the outgoing extrusion an optimal synchronisation between feeding of the elastomer material and movement of the support to which the extruded elastomer material is directed can be obtained, said synchronisation being possible due to constancy in said extrusion features.

In accordance with a first aspect, the present invention relates to a method for manufacturing elastomeric material components of a tyre for vehicle wheels, comprising the steps of:
feeding a continuous elongated element from a delivery member disposed close to a support for application of said elongated element onto the support itself;
giving the support a rotatory motion for circumferential distribution around a geometrical rotation axis of the support, so that the elongated element is circumferentially distributed on the support;
carrying out controlled relative displacements for transverse distribution between said support and said delivery member to form a component of a tyre with said elongated element which is defined by a plurality of coils laid down in a pre-established deposition pattern depending on a cross-section outline to be given to said component;
wherein the step of feeding said continuous elongated element takes place by extrusion of elastomer material through at least one extrusion screw and at least one gear pump associated therewith;
wherein a step of signalling the presence of said continuous elongated element coming out of said delivery member is provided, wherein an exit moment of said elongated element is coordinated with driving in rotation of said support around said geometric rotation axis.

Hereinafter in the claims and in the description, with the term "support" it is meant any support on whose surface the different tyre components can be assembled (i.e. carcass plies, annular reinforcing structure, belt strips and so on), having a suitable shape, for instance toroidal, cylindrical, e.g. the shape of a conventional manufacturing or shaping drum. More particularly the term "toroidal support" shall be understood as a toroidal support substantially rigid having an outer surface substantially matching the inner surface of the tyre.

In a preferred embodiment of said method, the working pressure of said elastomer material downstream of said gear pump is included between 550 and 650 bars.

According to a different aspect, the invention relates to an apparatus for manufacturing elastomeric material components of a tyre for vehicle wheels comprising a delivery member for the elastomer material operatively associated with a support connected to a movement device, to apply a plurality of elongated elements extruded from said delivery member onto said support to make said components, wherein said delivery member comprises a volumetric extruder provided with at least one extrusion screw operatively associated with at least one gear pump; wherein said volumetric extruder is operatively associated with a device for signalling the presence of said elastomer material coming out of said volumetric extruder.

According to a preferred aspect in a variant of the above embodiment, said device is an optical sensor.

In a different embodiment of said apparatus, provided between said gear pump and extrusion screw is a collecting chamber equipped with a pressure sensor for control of said gear pump.

In a further embodiment of the concerned apparatus, the intervening pressure of said pressure sensor on said gear pump is included between 170 and 230 bars.

In another embodiment of said apparatus, said movement device is designed to drive said support in rotation around an axis, and in motion according to six swinging axes.

In a different embodiment, in said apparatus said movement device is provided to be a robotized arm.

Advantageously, said apparatus for manufacturing elastomeric material components of a tyre for vehicle wheels is integrated into a work station being part of a tyre production plant.

Further features and advantages will become more apparent from the detailed description of a preferred but not exclusive embodiment of a method and an apparatus for manufacturing elastomeric material components of a tyre for vehicle wheels in accordance with the present description. This description will be set out hereinafter with reference to the accompanying drawings, given by way of non-limiting example, in which:
- Fig. 1 is a diagrammatic perspective view of an apparatus in accordance with the invention;

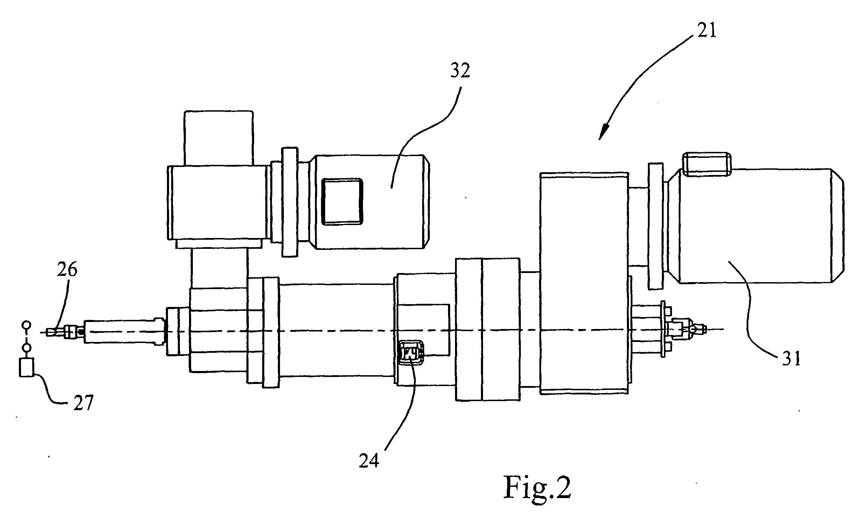

- Fig. 2 is a plan view of a delivery member belonging to the apparatus in reference;

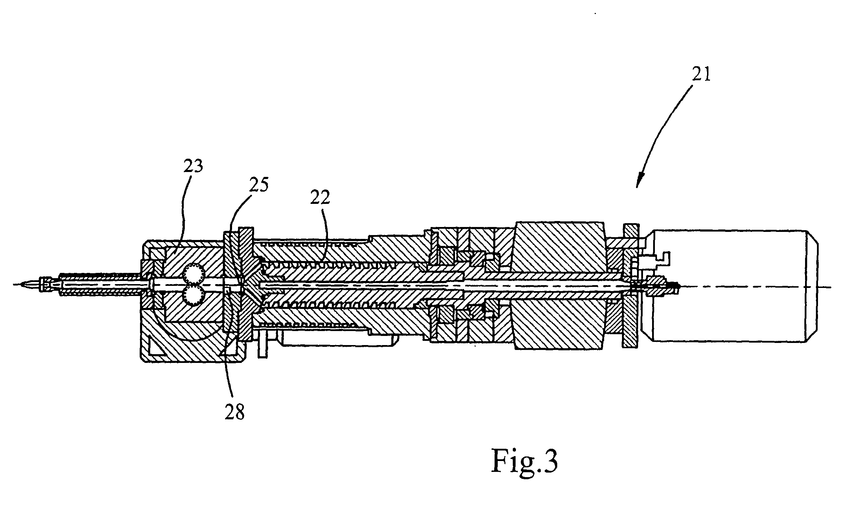

- Fig. 3 is partial partly-sectional top view of the delivery member shown in Fig. 2;
- Fig. 4 is a fragmentary cross-section of a green tyre built following a method in accordance with the present invention.

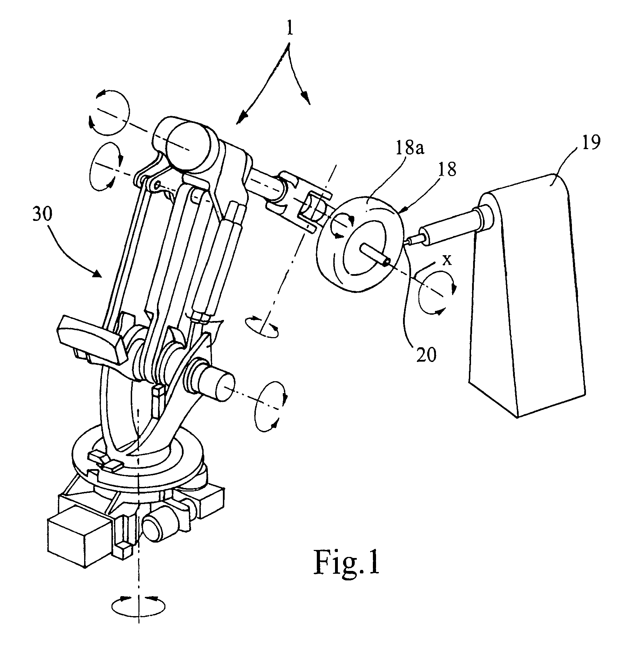

Referring particularly to Fig. 1, generally denoted at 1 is an apparatus set to manufacture elastomeric material components of tyres for vehicle wheels by a method in accordance with the present invention.

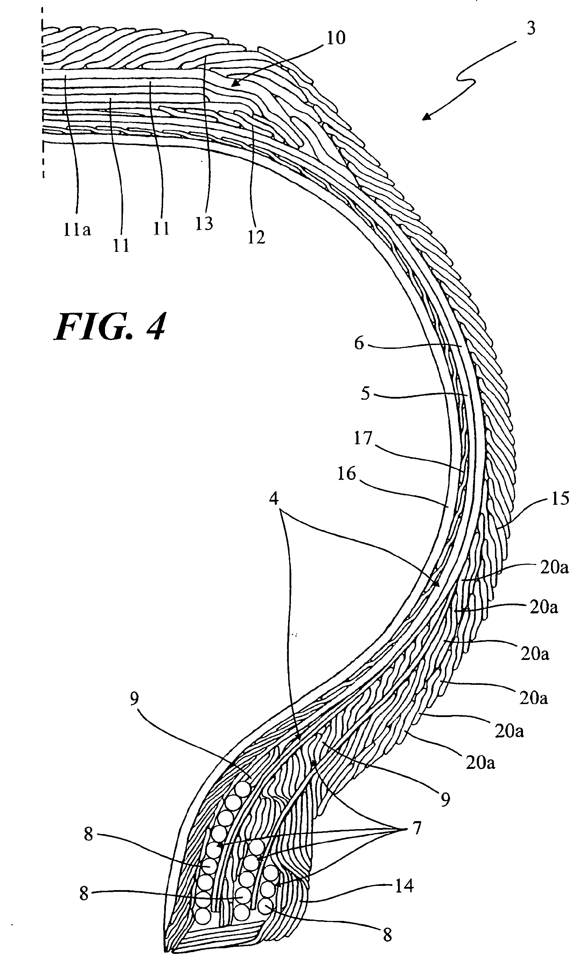

By way of example, a tyre to be made in accordance with the present invention is generally identified by reference numeral 3 in Fig. 4 and essentially comprises a carcass structure 4 formed with one or more carcass plies 5, 6 having the respective opposite end flaps fastened to annular reinforcing structures 7 (only one of which is shown in the accompanying figures) integrated into the inner circumferential regions of tyre 3, usually referred to as "beads". Each annular reinforcing structure 7 comprises one or more circumferential annular inserts 8 or bead cores and one or more filling inserts 9 coupled with the carcass plies 5, 6.

A belt structure 10 comprising one or more belt layers 11 having respectively crossed reinforcing cords is applied to the carcass structure 4, at a radially external position thereof, as well as a possible auxiliary belt layer 11a comprising one or more cords of textile material spire like wound up around the geometrical axis of tyre 3. Interposed between each of the side edges of the belt structure 10 and the carcass structure 4 is an under-belt insert 12.

Tyre 3 further comprises a tread band 13 applied to the belt structure 10 at a radially external position, a pair of abrasionproof inserts 14 each applied externally, close to one of the tyre beads, and a pair of sidewalls 15 each of which covers the carcass structure 4 at a laterally external position.

The carcass structure 4 can be internally coated with a so-called liner 16, i.e. a thin layer of elastomer material that, when vulcanisation has been completed, will be airtight so as to ensure maintenance in use of the tyre's inflating pressure. In addition, a so-called under-liner of elastomer material may be interposed between the liner 16 and the carcass plies 5, 6.

Apparatus 1 lends itself to be part of a plant not shown designed to produce tyres for vehicle wheels or to execute some of the working operations provided in the tyre production cycle.

Within these working operations all components of tyre 3 to be obtained can be conveniently provided to be directly built on a substantially rigid toroidal support 18 having an outer surface 18a substantially conforming in shape to the inner configuration of the tyre itself.

To this aim, such a plant generally comprises a plurality of work stations (only one of which is shown) each assigned to execution of at least one of the working operations aiming at building the tyre on the toroidal support. Such a plant is described in document WO 01/32409 in the name of the same Applicant, for example.

One or more apparatus 1 can be associated with different work stations so as to form, in accordance with the method in reference, one or more of the components of elastomeric material of tyre 3, such as the filling inserts 9 of the annular reinforcing structures 7, under-belt inserts 12, tread band 13, abrasionproof inserts 14, sidewalls 15, liner 16 and under-liner 17.

As shown in Fig. 1, apparatus 1 comprises at least one delivery member 19 set to operate close to the support 18 to feed at least one continuous elongated element 20 against the outer surface 18a of the support itself.

In a preferential embodiment, such a delivery member 19 is essentially defined by a volumetric extruder set to operate in close proximity to the said support 18 to deliver the continuous elongated element 20 directly either against the outer surface 18a or against the component previously formed on the same support or under formation thereon.

Said volumetric extruder denoted at 21 is provided with a so-called "die" 26 passed through by the product being worked at an outlet port conveniently shaped and sized depending on the geometrical and dimensional features to be given to the product itself.

Advantageously, the volumetric extruder 21 comprises at least one extrusion screw 22 to work the elastomer material, operatively associated with a gear pump 23. More specifically, the extrusion screw 22 over the whole longitudinal length thereof, works the elastomer material introduced thereinto through a load opening 24 until bringing it to a collecting chamber 25 upstream of said gear pump 23. Therein, a pressure sensor 28 or a device equivalent thereto operates said gear pump on achievement of a pressure included between approximately 170 and 230 bars, preferably a pressure of about 200 bars.

The gear pump 23 increases the elastomer material pressure until bringing it to about 550-650 bars, preferably to about 600 bars, which elastomer material is finally extruded through said die 26.

Said extrusion screw 22 and gear pump 23 are each driven by power units identified by reference numerals 31 and 32, respectively. In an alternative solution said power units 31, 32 can be replaced by a single power unit.

It will be recognised that due to the presence of a volumetric extruder comprising at least one extrusion screw and at least one gear pump, a continuous extrusion devoid of downtime periods due to reloading of the elastomer material can be ensured.

In addition, the elastomer material is always worked in a homogeneous manner and its features are maintained substantially unchanged; in particular a substantially constant viscosity is obtained which ensures a flow rate without important variations and therefore adapted to ensure formation of elongated elements 20 according to plan.

The above volumetric extruder, among other things does not contemplate the presence of passages having very reduced ports for the elastomer material being worked so that thermal shocks and burning of the material are avoided and consequently no particular purging is required during working.

Advantageously, an appropriate device signals the moment of the elastomer material coming out from die 26 to coordinate driving of the support 18 in rotation, through appropriate electronic devices (not shown). In fact, as better specified in the following, driving in rotation of said support 18 is to be carried out with an appropriate synchronism with respect to the elastomer material coming out of the extruder 21 to enable a distribution as planned of the elongated elements 20 of elastomer material on the same support 18. Said synchronisation is possible due to the high quality of the extrusion, relatively expressed by the constancy in the features of same.

Preferably, the device controlling the true exit of the extruded elastomer material from die 26 is an optical sensor 27 located externally of the die itself at the outlet port thereof.

The continuous elongated element 20 is preferably made up of a strip of elastomer material of flattened section, a rectangular, elliptic or lenticular section for example, the cross-section sizes of which are greatly reduced as compared with the cross-section sizes of the component that is wished to be made. By way of example, the continuous elongated element 20 may have a width included just as an indication between 3 millimetres and 15 millimetres, and a thickness included just as an indication between 0.5 millimetres and 1.2 millimetres.

One of the components previously identified by reference numerals 9, 12, 13, 14, 15, 16, 17, in its final configuration is obtained by delivering the elongated element 20 to the support 18 on which it is disposed, while a rotatory motion for circumferential distribution around a geometric rotation axis thereof identified by "X" is given to said support of such a nature that the elongated element itself is circumferentially distributed.

Concurrently with the rotation imposed to the support 18, transverse-distribution devices to be better described in the following carry out controlled relative displacements between the support and the delivery member 19, in such a manner that the elongated element 20 forms a series of coils 20a disposed in radial and/or axial side by side relationship following a pre-established deposition pattern depending on a predetermined cross-section outline to be given to the component being made.

In accordance with a preferential embodiment of the present invention, both the rotatory motion for circumferential distribution, i.e. rotation of the support 18 around its axis "X", and the controlled relative displacements for transverse distribution are achieved by directly moving the support 18.

For the purpose it is provided that the devices designed to drive the support 18 in rotation around its axis "X" and the devices designed to carry out displacements for transverse distribution should be integrated into at least one robotized arm generally identified by 30 and set to removably engage the support 18 to sequentially bring it in front of each of the work stations provided in the above mentioned plant and conveniently move it in front of the respective delivery members 19.

It should be recognised that the large freedom of movement given to the support 18 according to six swinging axes as shown in the above mentioned document WO 01/36185 in the name of the same Applicant, as well as driving in rotation of said support around the geometric axis "X" enable a correct deposition of the elongated element 20 from the extruder 21 to be carried out, irrespective of the conformation of the support 18 and the component to be obtained.

The rotatory motion for circumferential distribution given to the toroidal support 18 is constantly controlled, in terms of angular speed, depending on the distance existing between the application point of the elongated element 20 and the geometric rotation axis X. In particular, the angular-rotation speed is managed in such a manner that the support 18 at the application point has a constantly-controlled peripheral application speed depending on the speed at which the elongated element 20 is fed by the delivery member 19, said feeding speed being advantageously signalled by said optical sensor 27.

More specifically, as illustrated in the mentioned document WO 01/36185, the peripheral application speed is provided to have a nominal value constantly greater than and directly proportional to the theoretical speed at which the elongated element 20 is fed by extruder 21.

To the aims of the present description, by "theoretical feeding speed" it is meant the linear amount of elongated element 20 fed by extruder 21 in the unit time, as measured in the absence of internal stresses on the elongated element itself.

This statement is to be taken into account above all in the case in which, as in the embodiment shown, the delivery member 19 substantially comprises an extruder 21 laying down the elongated element 20 directly onto the surface 18a of support 18. In this case the theoretical feeding speed of the elongated element 20 is the speed that would be measured downstream of the extruder 21 if the elongated element would not be submitted to the dragging action by the support 18.

Therefore, the value of the theoretical feeding speed is lower than the value of the speed to be measured on the elongated element itself at the extruder outlet port.

Preferably, the nominal value of the peripheral application speed is greater than the theoretical feeding speed by a measure not exceeding 20%, so as to produce a corresponding action of longitudinal stretching on the elongated element 20. More specifically, the application speed is maintained substantially equal to the exit speed of the elongated element through the outlet port of the extruder, to be measured in close proximity to the outlet port itself. In this way, the cross-section sizes of the elongated element laid down on the support 18 keep substantially identical with those of the extruder outlet port.

Consequently, one or more electronic computers (not shown) that are preferably designed for control and command of said work stations each comprising apparatus 1, are put in a position to use simpler calculation algorithms for programming the coil-deposition pattern during the planning step.

Maintenance of the application speed to a greater value than the theoretical feeding speed further ensures an optimal adhesion of the elongated element to the outer surface 18a of the support 18.

It is also advantageously possible to modify, in case of need, the peripheral application speed with respect to the nominal value to carry out a programmed control of the cross-sectional sizes of the elongated element 20. In particular, the application speed can be increased with respect to the nominal value in order to obtain thinning of the elongated element 20 so as to form coils 20a of reduced section at points where the cross-section outline of a component is particularly thin, as it happens at the apex of the filling inserts 9 for example, at their radially external edges. It is also possible to reduce the application speed with respect to the nominal value where coils 20a of increased section are wished to be obtained by effect of the consequent swelling of the cross section of the elongated element.

## Claims

1. A method for manufacturing elastomeric material components of a tyre for vehicle wheels, comprising the steps of:
feeding a continuous elongated element (20) from a delivery member (19) disposed close to a support (18) for application of said elongated element (20) onto the support itself;
giving the support (18) a rotatory motion for circumferential distribution around a geometrical rotation axis (X) of the support (18), so that the elongated element (20) is circumferentially distributed on the support (18);
carrying out controlled relative displacements for transverse distribution between said support (18) and said delivery member (19) to form a component (9, 12, 13, 14, 15, 16, 17) of a tyre (3) with said elongated element (20) which is defined by a plurality of coils (20a) laid down in a pre-established deposition pattern depending on a cross-section outline to be given to said component (9, 12, 13, 14, 15, 16, 17);
wherein the step of feeding said continuous elongated element (20) takes place by extrusion of elastomer material through at least one extrusion screw (22) and at least one gear pump (23) associated therewith;
**characterised in that** a step of signalling the presence of said continuous elongated element (20) coming out of said delivery member (19) is provided, wherein an exit moment of said elongated element (20) is coordinated with driving in rotation of said support (18) around said geometric rotation axis (X).

2. A method as claimed in claim 1, wherein said support is a toroidal support (18).

3. A method as claimed in claim 2, wherein said step of carrying out controlled relative displacements is carried out moving said toroidal support (18) on a plurality of axes.

4. A method as claimed in claim 1 or 3, wherein the working pressure of said elastomer material downstream of said gear pump (23) is included between 550 and 650 bars.

5. An apparatus for manufacturing elastomeric material components of a tyre for vehicle wheels comprising a delivery member (19) for the elastomer material set to operate close to a support (18) connected to a movement device , to apply a plurality of elongated elements (20) extruded from said delivery member (19) onto said support (18) to make said components (9, 12, 13, 14, 15, 16, 17), wherein said delivery member (19) comprises a volumetric extruder (21) provided with at least one extrusion screw (22) operatively associated with at least one gear pump (23); **characterised in that** said volumetric extruder (21) is operatively associated with a device for signalling the presence of said elastomer material coming out of said volumetric extruder (21) to coordinate driving of the support (18) in rotation.

6. Apparatus as claimed in claim 5, wherein said support is a toroidal support (18).

7. Apparatus as claimed in claim 6, wherein said toroidal support (18) is connected to a movement device for movement on a plurality of axes.

8. An apparatus as claimed in claim 5 or 7, wherein said signalling device is an optical sensor (27).

9. An apparatus as claimed in claim 5 or 7, wherein a collecting chamber (25) equipped with a pressure sensor (28) for control of said gear pump (23) is provided between said gear pump (23) and extrusion screw (22).

10. An apparatus as claimed in claim 9, wherein the intervening pressure of said pressure sensor (28) on said gear pump (23) is included between 170 and 230 bars.

11. An apparatus as claimed in claim 5 or 7, wherein said movement device is designed to drive said support (18) in rotation around an axis (X), and in motion according to six swinging axes.

12. An apparatus as claimed in claim 11, wherein said movement device is provided to be a robotized arm (30).

13. An apparatus as claimed in claim 5 or 7, wherein said apparatus (1) is integrated into a work station being part of a tyre (3) production plant.

## Patentansprüche

1. Verfahren zur Herstellung von aus elastomerem Material bestehenden Komponenten eines Reifens für Fahrzeugräder, wobei das Verfahren die Schritte aufweist:
- Zuführen eines fortlaufenden langgestreckten Elements (20) von einem Abgabeelement (19), das nahe an einem Träger (18) für das Aufbringen des langgestreckten Elements (20) auf den Träger angeordnet ist,
- Erteilen einer Drehbewegung an den Träger (18) für eine Umfangsverteilung um eine geometrische Drehachse (X) des Trägers (18) derart, dass das langgestreckte Element (20) im Umfang auf dem Träger (18) verteilt wird, und
- Ausführen von gesteuerten Relativverschiebungen für eine Querverteilung zwischen dem Träger (18) und dem Abgabeelement (19) zur Bildung einer Komponente (9, 12, 13, 14, 15, 16, 17) eines Reifens (3) mit dem langgestreckten Element (20), die durch eine Vielzahl von Windungen (20a) gebildet wird, die in einem vorher eingestellten Ablagemuster abgelegt werden, das von einem Querschnittsumriss abhängt, der der Komponente (9, 12, 13, 14, 15, 16, 17) gegeben werden soll,
- wobei der Schritt des Zuführens des fortlaufenden langgestreckten Elements (20) durch Extrusion von elastomerem Material durch wenigstens eine Extrusionsschnecke (22) und wenigstens eine zugeordnete Zahnradpumpe (23) erfolgt,
**dadurch gekennzeichnet,**
- **dass** ein Schritt für das Signalisieren des Vorhandenseins des fortlaufenden langgestreckten Elements (20) vorgesehen ist, das aus dem Abgabeelement (19) herauskommt,
- wobei ein Austrittsmoment des langgestreckten Elements (20) mit dem in Drehung Versetzen des Trägers (18) um die geometrische Drehachse (X) herum koordiniert wird.

2. Verfahren nach Anspruch 1, bei welchem der Träger ein torusförmiger Träger (18) ist.

3. Verfahren nach Anspruch 2, bei welchem der Schritt des Ausführens von gesteuerten Relativverschiebungen **dadurch** ausgeführt wird, dass der torusförmige Träger (18) auf einer Vielzahl von Achsen bewegt wird.

4. Verfahren nach Anspruch 1 oder 3, bei welchem der Arbeitsdruck des elastomeren Materials stromab von der Zahnradpumpe (23) zwischen 550 und 650 bar liegt.

5. Vorrichtung zur Herstellung aus elastomerem Material bestehenden Komponenten eines Reifens für Fahrzeugräder
- mit einem Abgabeelement (19) für das elastomere Material, das für seine Funktion nahe an einem Träger (18) angeordnet ist, der mit einer Bewegungsvorrichtung verbunden ist, um eine Vielzahl von langgestreckten Elementen (20), die aus dem Abgabeelement (19) extrudiert werden, auf den Träger (18) zur Bildung der Komponenten (9, 12, 13, 14, 15, 16, 17) aufzubringen,
- wobei das Abgabeelement (19) eine Strangpresse (21) aufweist, die mit wenigstens einer Extruderschnecke (22) versehen ist, der funktionsmäßig wenigstens eine Zahnradpumpe (23) zugeordnet ist,
**dadurch gekennzeichnet,**
- **dass** die Strangpresse (21) funktionsmäßig eine Vorrichtung zum Signalisieren des Vorhandenseins des elastomeren Materials zugeordnet ist, das aus der Strangpresse (21) kommt, um das in Drehung Versetzen des Trägers (18) zu koordinieren.

6. Vorrichtung nach Anspruch 5, bei welcher der Träger ein torusförmiger Träger (18) ist.

7. Vorrichtung nach Anspruch 6, bei welcher der torusförmige Träger (18) mit einer Bewegungsvorrichtung zum Bewegen auf einer Vielzahl von Achsen verbunden ist.

8. Vorrichtung nach Anspruch 5 oder 7, **dadurch gekennzeichnet, dass** die Signalisiervorrichtung ein optischer Sensor (27) ist.

9. Vorrichtung nach Anspruch 5 oder 7, bei welcher eine mit einem Drucksensor (28) zum Steuern der Zahnradpumpe (23) ausgerüstete Sammelkammer (25) zwischen der Zahnradpumpe (23) und der Extruderschnecke (22) vorgesehen ist.

10. Vorrichtung nach Anspruch 9, bei welcher der Intervenierdruck des Drucksensors (28) an der Zahnradpumpe (23) zwischen 170 und 230 bar beträgt.

11. Vorrichtung nach Anspruch 5 oder 7, bei welcher die Bewegungsvorrichtung so ausgelegt ist, dass sie den Träger (18) um eine Achse (X) dreht und entsprechend sechs Schwingachsen bewegt.

12. Vorrichtung nach Anspruch 11, bei welcher die Bewegungsvorrichtung robotisierter Arm (30) vorgesehen ist.

13. Vorrichtung nach Anspruch 5 oder 7, welche in eine Arbeitsstation integriert ist, die Teil einer Herstellungsanlage für Reifen (3) ist.

## Revendications

1. Procédé de fabrication de composants en matériau élastomère d'un pneu pour roues de véhicule, comprenant les étapes consistant à :
amener un élément allongé continu (20) depuis un élément de distribution (19) placé à proximité d'un support (18) pour l'application dudit élément allongé (20) sur le support lui-même ;
donner au support (18) un mouvement de rotation pour une répartition périphérique autour d'un axe de rotation géométrique (X) du support (18), de sorte que l'élément allongé (20) est réparti de manière périphérique sur le support (18);
effectuer des déplacements relatifs contrôlés pour une répartition transversale entre ledit support (18) et ledit élément de distribution (19) pour former un composant (9, 12, 13, 14, 15, 16, 17) d'un pneu (3) avec ledit élément allongé (20) qui est défini par une pluralité de spires (20a) posées avec un motif de pose préétabli dépendant d'un contour de section transversale à donner audit composant (9, 12, 13, 14, 15, 16, 17) ;
dans lequel l'étape d'alimentation dudit élément allongé continu (20) se fait par extrusion d'un matériau élastomère par au moins une vis d'extrusion (22) et au moins une pompe à engrenages (23) associée à celle-ci ;
**caractérisé en ce qu'**une étape de signalisation de la présence dudit élément allongé continu (20) sortant dudit élément de distribution (19) est prévue, dans laquelle un moment de sortie dudit élément allongé (20) est coordonné à la commande en rotation dudit support (18) autour dudit axe de rotation géométrique (X).

2. Procédé selon la revendication 1, dans lequel ledit support est un support toroïdal (18).

3. Procédé selon la revendication 2, dans lequel ladite étape de réalisation de déplacements relatifs contrôlés est exécutée en déplaçant ledit support toroïdal (18) sur une pluralité d'axes.

4. Procédé selon la revendication 1 ou 3, dans lequel la pression de travail dudit matériau élastomère en aval de ladite pompe à engrenages (23) est comprise entre 550 et 650 bars.

5. Dispositif pour fabriquer des composants en matériau élastomère d'un pneu pour roues de véhicule comprenant un élément de distribution (19) pour le matériau élastomère, réglé pour fonctionner à proximité d'un support (18) relié à un dispositif de déplacement, pour appliquer une pluralité d'éléments allongés (20) extrudés à partir dudit élément de distribution (19) sur ledit support (18) pour fabriquer lesdits composants (9, 12, 13, 14, 15, 16, 17), dans lequel ledit élément de distribution (19) comprend une extrudeuse volumétrique (21) dotée d'au moins une vis d'extrusion (22) associée fonctionnellement à au moins une pompe à engrenages (23) ; **caractérisé en ce que** ladite extrudeuse volumétrique (21) est associée fonctionnellement à un dispositif servant à signaler la présence du matériau élastomère sortant de ladite extrudeuse volumétrique (21) pour coordonner la commande du support (18) en rotation.

6. Dispositif selon la revendication 5, dans lequel ledit support est un support toroïdal (18).

7. Dispositif selon la revendication 6, dans lequel ledit support toroïdal (18) est relié à un dispositif de déplacement pour être déplacé sur une pluralité d'axes.

8. Dispositif selon la revendication 5 ou 7, dans lequel ledit dispositif de signalisation est un capteur optique (27).

9. Dispositif selon la revendication 5 ou 7, dans lequel une chambre collectrice (25) pourvue d'un capteur de pression (28) pour le contrôle de ladite pompe à engrenages (23) est placée entre ladite pompe à engrenages (23) et la vis d'extrusion (22).

10. Dispositif selon la revendication 9, dans lequel la pression d'intervention dudit capteur de pression (28) sur ladite pompe à engrenages (23) est comprise entre 170 et 230 bars.

11. Dispositif selon la revendication 5 ou 7, dans lequel le dispositif de déplacement est conçu pour entraîner le support (18) en rotation autour d'un axe (X), et en mouvement selon six axes de pivotement.

12. Dispositif selon la revendication 11, dans lequel ledit dispositif de déplacement est prévu pour être un bras robotisé (30).

13. Dispositif selon la revendication 5 ou 7, dans lequel le dispositif (1) est intégré à une station de travail faisant partie d'une usine de production de pneus (3).
